# EUROPEAN PATENT SPECIFICATION

(11) **EP 0 868 324 B1**
(45) Date of publication and mention of the grant of the patent: **24.04.2002**
(21) Application number: 97900482.7
(22) Date of filing: 08.01.1997
(51) Int. Cl.: B60P 1/44

(54) **VEHICLE PROVIDED WITH A TAILBOARD**
FAHRZEUG MIT BORDWAND
VEHICULE POURVU D'UNE RIDELLE ARRIERE

(30) Priority: 19.01.1996 NL 1002127
(43) Date of publication of application: 07.10.1998
(73) Proprietor: Jaspers, Antonius, Petrus, 5672 AJ Nuenen (NL)
(72) Inventor: Jaspers, Antonius, Petrus, 5672 AJ Nuenen (NL)
(74) Representative: Louet Feisser, Arnold
(86) International application number: NL9700007
(87) International publication number: WO9726148

(56) References cited:
- GB-A- 411 542
- GB-A- 1 198 184
- GB-A- 2 121 375
- US-A- 1 630 473
- US-A- 3 666 123

## Description

The invention relates to a vehicle provided with a tailboard which can be moved in a substantially horizontal position from a low position, in which the tailboard is positioned near the ground, to a high position, in which the tailboard is substantially contiguous to a floor portion of the vehicle, and vice versa, whereby on either side of the tailboard a first lifting element is present in the shape of a pivoting arm which is pivoted to the vehicle about a first pivot axis, which first lifting element pivotably engages the tailboard near the edge of the tailboard that faces the vehicle, and a second lifting element is present, which is connected to the tailboard at a point some distance apart from said edge.

GB-A-0411542 discloses such vehicle having a first lifting element comprising a parallelogram construction to keep the tailboard in a horizontal position and having a second lifting element comprising a robe for driving the movement of the tailboard.

US-A-3666123 discloses a vehicle having a tailboard with a first lifting element as described above. The second lifting element comprises a bar fixed to the first lifting element. The end of the bar is provided with a rotatable pulley guiding a robe. The length of the bar is extensive so that the displacement of the robe by the pivoting bar is sufficient to lift the tailboard.

Such a vehicle is often a lorry for transporting heavy goods which can be loaded and unloaded by means of the tailboard. The goods are thereby placed on the tailboard, after which the tailboard with the goods present thereon moves in vertical direction. During said movement the tailboard can be maintained in a horizontal position because a second pivoting arm is provided under each pivoting arm, thus forming a parallelogram construction comprising two short sides which interconnect the ends of said pivoting arms. One short side is thereby attached to the vehicle, whilst the other short side is connected to the tailboard. Both the tailboard and the mechanism for moving the tailboard must be of robust construction in order to be able to move heavy goods, because they must be able to take up large forces.

Because the tailboard is engaged near the edge facing the vehicle, the tailboard must be of relatively robust construction in order to be able to take up the large torque that is developed when the tailboard is loaded. This is particularly the case when the tailboard comprises a large dimension in the direction perpendicularly to said edge. A large dimension is advantageous with a view to transporting goods having large dimensions. A large dimension may also be important when the tailboard is to close the rear side of the vehicle partially or entirely after being moved to a vertical position.

Also the use of said parallelogram construction leads to large forces being developed, which forces will have to be taken up by a relatively robust mechanism for moving the tailboard.

A tailboard of robust construction can be mounted on a heavy lorry without any problem, but such a tailboard is less suitable for being used on a trailer or a van, whose construction is generally kept as light as possible in order to be able to transport a maximum amount of cargo. In addition, such a tailboard is positioned at the rear end of the vehicle, which is an unfavourable place for mounting a heavy construction.

The object of the invention is to provide a vehicle provided with a tailboard, in particular a trailer or a light lorry (van), whereby the tailboard and the means for moving the tailboard are relatively light in weight, whilst the tailboard can be used in an efficient manner for loading and unloading persons or heavy goods.

In order to accomplish that objective said second lifting element comprises a pivoting element, which is pivoted to said vehicle about a second pivot axis, and a pulling element, which is attached on the one hand to the tailboard and on the other hand to the pivoting element, at a point some distance apart from said second pivot axis.

In a preferred embodiment said second lifting element engages the tailboard at a point which is spaced from said edge by a distance which is larger than one third, preferably larger than half the dimension of the tailboard in a direction perpendicularly to said edge.

This construction forms an efficient mechanism for moving the tailboard, whereby the two first lifting elements in the shape of pivoting arms provide a proper positioning of the edge of tailboard that faces the vehicle when the tailboard is in its high position, in which it is contiguous to the floor portion of the vehicle, whilst the pivoting arms guide the tailboard in a stable manner to its low position, in which the tailboard is positioned near the ground. The second lifting elements, which are likewise positioned on either side of the tailboard, engage said tailboard at a favourable point, that is, at a relatively large distance from the aforesaid edge. A tailboard having a lifting capacity of a few hundred kilograms may weigh less than 75 kg.

The term first lifting element or second lifting element used herein is understood to refer to respectively two lifting elements present on either side of the tailboard and of the vehicle.

Preferably said second lifting element may furthermore be connected to the vehicle at a point located above the first pivot axis, whereby the second lifting element is constructed in such a manner that it is capable of enlarging and reducing the distance between said point and the point where the second lifting element engages the tailboard. A lifting element of this type may be in the shape of a hydraulic cylinder unit or of an element comprising an electrically driven spindle, whereby the length of said element can be adjusted.

Preferably said second lifting element comprises a pivoting element, which is pivoted to said vehicle about a second pivot axis, and a pulling element, which is attached on the one hand to the tailboard and on the other hand to the pivoting element, at a point some distance apart from said second pivot axis. The pulling element may be a rope and the pivoting element may be a rope drum on which said rope is wound, so that the end of the rope connected to the tailboard can be moved upwards upon rotation of the rope drum. The pulling element may also be a chain and the pivoting element may be a chain wheel.

In a preferred embodiment the pulling element comprises one bar, or two pivotably interconnected bars, whereby the pulling element is pivotably attached on the one hand to the tailboard and on the other hand to the pivoting element. Preferably a mechanical coupling is provided between the first lifting element and the second lifting element, such that a driving mechanism driving a lifting element also drives the other lifting element via said former lifting element and said mechanical coupling. The mechanical coupling may comprise a connecting element which is connected on the one hand to said first lifting element, at a point some distance apart from said first pivot axis, and on the other hand to the pivoting element of the second lifting element, at a point some distance apart from said second pivot axis, which connecting element may have an adjustable length dimension. This will be explained in more detail yet by means of an illustrative embodiment.

In a preferred embodiment the driving means for moving the tailboard may engage the first lifting element at a point between said first pivot axis and the aforesaid edge of the tailboard. The driving means may be comprised of a rope, which can be wound up manually, or of a hydraulic cylinder unit. In a preferred embodiment the driving means comprise an electrically driven spindle, which is attached on the one hand to the vehicle and on the other hand to said first lifting element.

In a preferred embodiment the first lifting element and the second lifting element may both be attached to a vertical stiffening plate, which is secured to the vehicle, so that the forces required for moving the tailboard can be transmitted via said stiffening plate to parts of the vehicle where they can be taken up.

Preferably said first pivot axis is located lower than the floor portion to which the tailboard may be contiguous, and said second lifting element is connected to the vehicle at a point higher than said floor portion.

Preferably the vehicle is provided with side walls on either side of the floor portion to which the tailboard may be contiguous, and the first lifting element as well as the second lifting element of the driving mechanism are positioned on the side of the side wall remote from said floor portion. The mechanism for moving the tailboard may be accommodated in a space having a small transverse dimension, thus making it possible for said mechanism to be mounted close to the side walls of the vehicle, on the outer side of said side walls.

In a preferred embodiment the tailboard can be pivoted between a substantially horizontal position and a substantially vertical position when occupying its high position, whereby the tailboard can be engaged and pivoted by hand and be locked in said vertical position by means of a latch. The tailboard thereby forms the rear wall of the vehicle.

The invention furthermore relates to a method for moving a tailboard of a vehicle, wherby the tailboard is moved in a substantially horizontal position from a low position, in which the tailboard is positioned near the ground, to a high position, in which the tailboard is substantially contiguous to a floor portion of the vehicle, and vice versa, whereby on either side of the tailboard a first lifting element is present in the shape of a pivoting arm which is pivoted to the vehicle about a first pivot axis, which first lifting element pivotably engages the tailboard near the edge of the tailboard that faces the vehicle, and a second lifting element is present, which is connected to the tailboard at a point some distance apart from said edge, characterized in that said second lifting element comprises a pivoting element, which pivot to said vehicle about a second pivot axis, and a pulling element, which is attached on the one hand to the tailboard and on the other hand to the pivoting element, at a point some distance apart from said second pivot axis.

Further aspects of the invention, which may be used separately as well as in conjunction with each other, are described by means of an illustrative embodiment and defined in the claims.

In order to more fully explain the invention a few embodiments of the mechanism for moving a tailboard will be described hereafter with reference to the drawing.
Figure 1 is a side view of a tailboard in a vertical position;
Figure 2 is a side view of the tailboard in its high position;
Figure 3 is a side view of the tailboard in its low position;
Figure 4 is a perspective view of the tailboard of Figures 1-3; and
Figure 5 is a schematic representation of another embodiment of the invention.

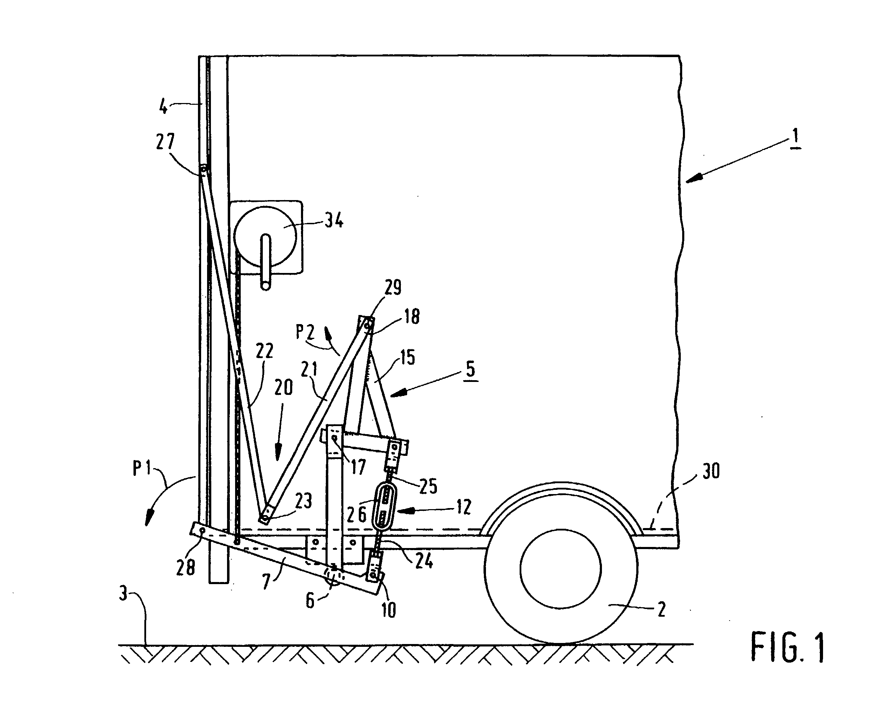

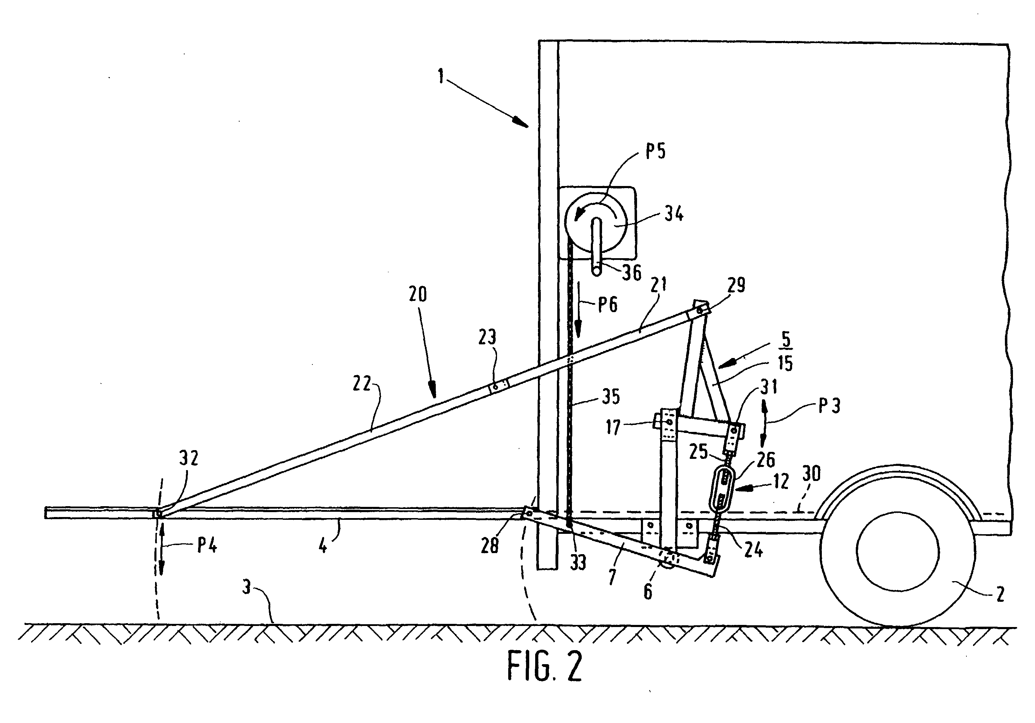

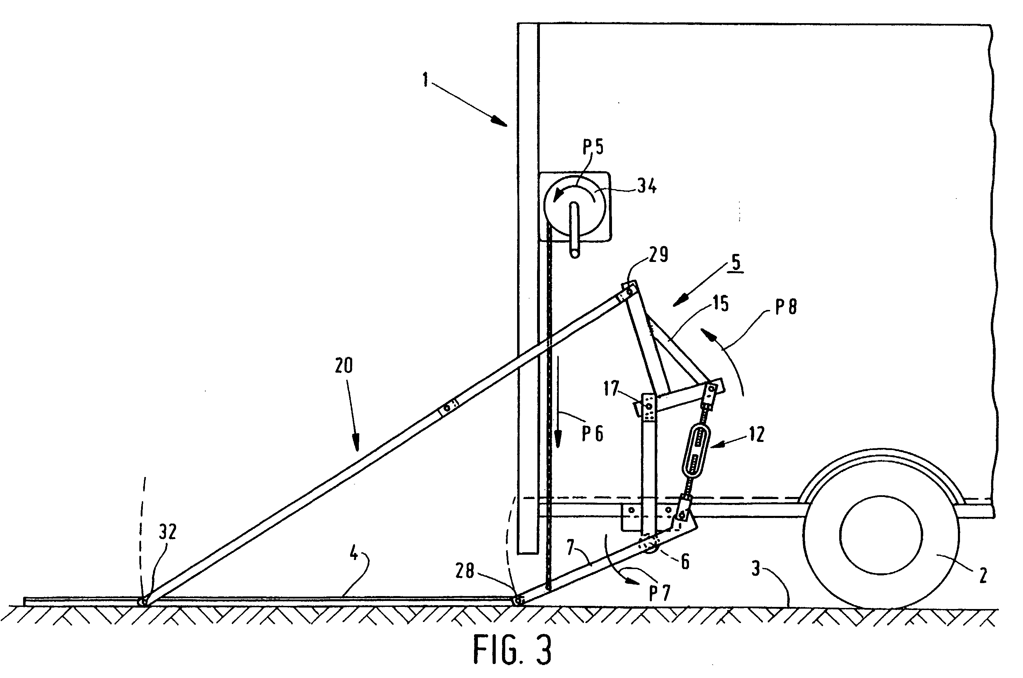

The Figures are merely schematic and global representations, wherein like parts are numbered alike. Figures 1, 2, 3 and 4 show the rear part of a van or trailer 1, which can run on the ground 3 by means of wheels 2. Trailer 1 is provided with a tailboard 4, which, when occupying a vertical position (Figure 1), forms the rear wall of trailer 1 and which, when occupying a horizontal position, may be contiguous to the floor 30 of the trailer (Figure 2) and be moved to a low position on the ground (Figure 3). A mechanism 5 is provided for moving the tailboard 4 between the high position shown in Figure 2, in which the tailboard is contiguous to the floor 30 of the trailer, and a low position, which is shown in Figure 3.

Mechanism 5 comprises a first lifting element in the shape of a pivoting arm 7, which can pivot about a first pivot axis 6 with respect to the trailer 1 and whose end 28 is pivotably attached to tailboard 4. First pivot axis 6 is located lower than floor 30, so that the tailboard 4 will initially have a horizontal component of movement, in a direction away from trailer 1, when moving downwards from its high position.

Driving means in the shape of a drum 34, on which a rope 35 can be wound or from which said rope can be unwound, are provided for pivoting the arm 7, said rope with its end being connected to pivoting arm 7, at a point indicated at 33. From the high position of tailboard 4 shown in Figure 2 rope 35 can be moved in the direction indicated by arrow P6 by rotating drum 34 in the direction indicated by arrow P5. Said rotating of drum 34 may take place by moving operating handle 36 by hand. Drum 34 can be locked in any position by means not shown.

A second lifting element in the shape of a pivoting element 15 and a pulling element 20 are provided for moving tailboard 4. Said pulling element consists of two bars 21,22, which are pivotably interconnected about pivot axis 23. Pulling element 20 is pivoted on the one hand to pivoting element 15 about pivot axis 29 and on the other hand to tailboard 4 about pivot axis 32. The second lifting element is capable of moving tailboard 4 upwards and downwards, because pivoting element 15 pivots with respect to trailer 1 about second pivot axis 17, whereby pivot axis 32 moves in a substantially vertical direction, as is indicated by arrow P4. The pivoting movement of pivoting element 15 is indicated by arrow P3.

Pivoting element 15 and pivoting arm 7 are interconnected by means of connecting element 12, which consists of two studs 24,25, which are interconnected by means of yoke 26. The length of connecting element 12 can be adjusted by rotating yoke 26.

Connecting element 12 is pivoted to pivoting arm 7 about pivot axis 10 (Figure 1) and to pivoting element 15 about pivot axis 31 (Figure 2).

Figure 3 shows how tailboard 4 has been moved from its high position (Figure 2) to its low position, whereby rope 35 has been moved in the direction of arrow P6, pivoting arm 7 has been pivoted in the direction of arrow P7 and pivoting element 15 has been pivoted in the direction of arrow P8. By correctly adjusting the length of connecting element 12 the movements of pivoting arm 7 and pivoting element 15 are coupled in such a manner that tailboard 4 is in a substantially horizontal position at all times.

Figure 1 shows how tailboard 4 has been moved to its vertical position from the position shown in Figure 2. From the latter position tailboard 4 is pivoted about pivot axis 28 by hand, after which tailboard 4 is locked in said vertical position by locking means not shown, thereby forming the rear wall of trailer 1. The two bars 21,22 of pulling element 20 thereby pivot about their pivot axis 23. Arrow P1 indicates how tailboard 4 can subsequently be pivoted to a horizontal position again.

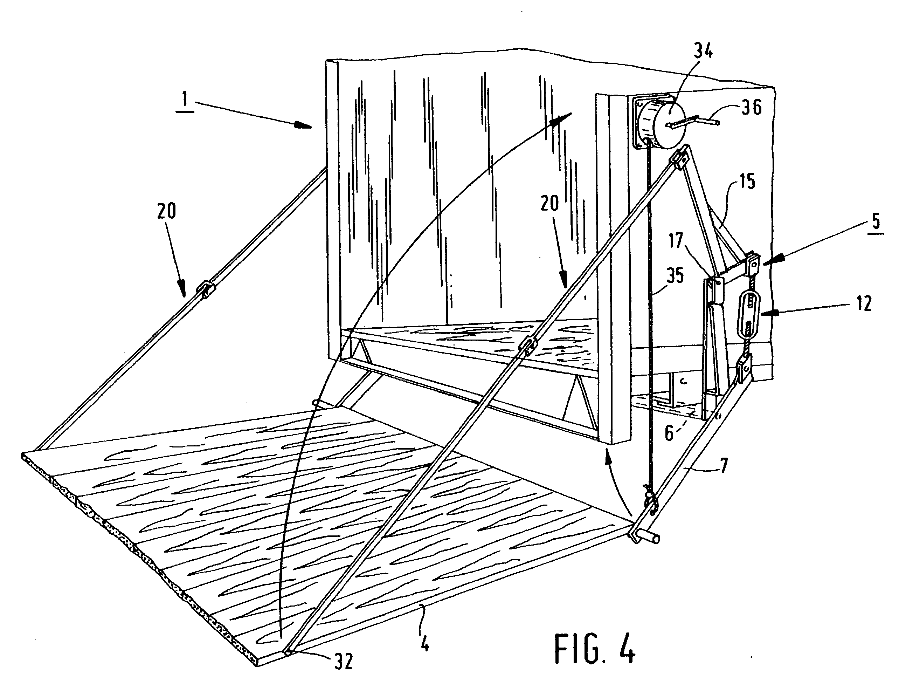

Figure 4 is a perspective view which shows that mechanism 5 is provided on the outer side of the side wall of trailer 1. Mechanism 5 may also be provided on the inner side of said side wall, if desired. In both cases mechanism 5 comprises a small transverse dimension and can be covered by means of a cover. Driving means 34,35,36 may be provided on either side of trailer 1, or only on one side of the truck, as is shown in Figure 4.

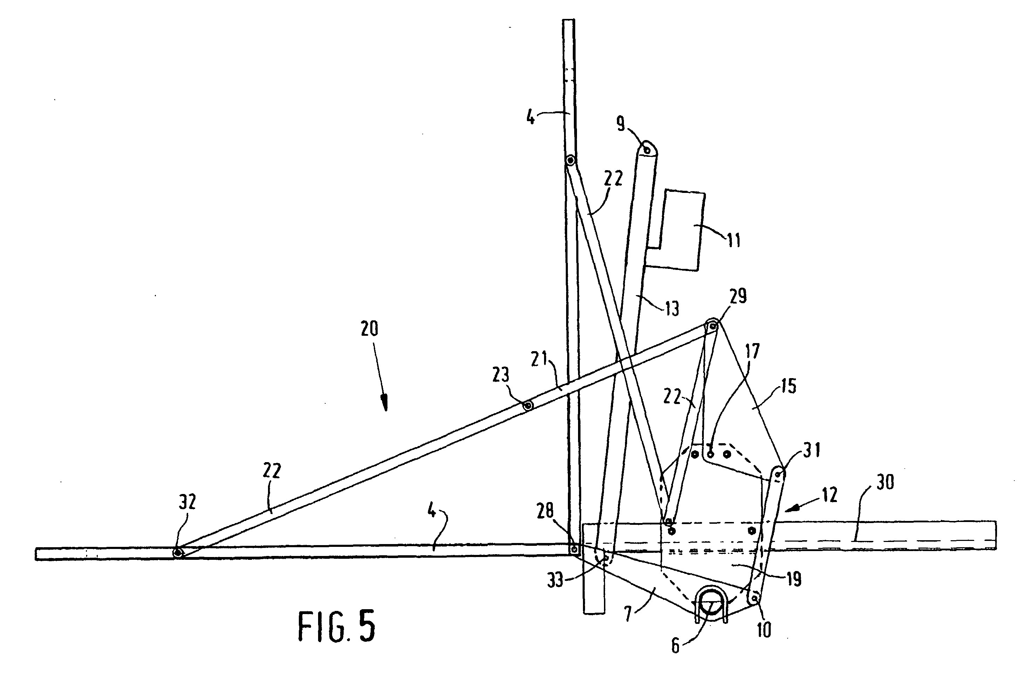

Figure 5 schematically shows another embodiment, wherein tailboard 4 is illustrated in its vertical as well as in its horizontal position, comparable with the representations of Figure 1 and Figure 2 respectively. Both pivoting arm 7 and pivoting element 15 are pivotably attached to a stiffening plate 19, which is attached to the trailer.

The operation of this embodiment corresponds with the operation of the embodiment shown in Figures 1 - 4 and like parts are numbered alike.

The driving mechanism according to Figure 5 is comprised of an electrically driven spindle 13, which is pivoted to the trailer about pivot axis 9 and whose length can be adjusted by driving electromotor 11.

## Claims

1. A vehicle provided with a tailboard (4) which can be moved in a substantially horizontal position from a low position, in which the tailboard (4) is positioned near the ground (3), to a high position, in which the tailboard (4) is substantially contiguous to a floor portion (30) of the vehicle (1), and vice versa, whereby on either side of the tailboard (4) a first lifting element is present in the shape of a pivoting arm (7) which is pivoted to the vehicle (1) about a first pivot axis (6), which first lifting element pivotably engages the tailboard (4) near the edge of the tailboard (4) that faces the vehicle (1), and a second lifting element (15, 20) is present, which is connected to the tailboard (4) at a point some distance apart from said edge, **characterized in that** said second lifting element (15, 20) comprises a pivoting element (15), which is pivoted to said vehicle (1) about a second pivot axis (17), and a pulling element (20), which is attached on the one hand to the tailboard (4) and on the other hand to the pivoting element (15), at a point some distance apart from said second pivot axis (17).

2. A vehicle according to claim 1, **characterized in that** said pulling element (20) comprises two pivotably interconnected bars (21,22), which are pivotably attached on the one hand to the tailboard (4) at on the other hand to said pivoting element (15).

3. A vehicle according to any one of the preceding claims, **characterized in that** a mechanical coupling (12) is provided between the first lifting element (7) and the said second lifting element (15,20), such that a driving mechanism (23,35,36; 11,13) driving a lifting element (7) also drives the other lifting element (15,20) via said lifting element (7) and said mechanical coupling (12).

4. A vehicle according to claim 3, **characterized in that** said mechanical coupling comprises a connecting element (12) which is connected on the one hand to said first lifting element (7), at a point some distance apart from said first pivot axis (6), and on the other hand to the pivoting element (15) of the second lifting element (15,20) at a point some distance apart from said second pivot axis (17).

5. A vehicle according to claim 4, **characterized in that** said connecting element (12) has an adjustable length dimension.

6. A vehicle according to any one of the preceding claims, **characterized by** driving means (34,35,36; 11,13) which engage the first lifting element (7) at a point (33) between said first pivot axis (6) and the aforesaid edge of the tailboard (4).

7. A vehicle according to any one of the preceding claims, **characterized in that** said first lifting element (7) and said second lifting element (15,20) are both attached to a vertical stiffening plate which is secured to the vehicle (1).

8. A vehicle according to any one of the preceding claims, **characterized in that** the tailboard (4) can be pivoted between a substantially horizontal position and a substantially vertical position when occupying its high position, whereby the tailboard (4) can be engaged and pivoted by hand and be locked in said substantially vertical position by means of a latch, thus forming the rear wall of the vehicle (1).

9. A tailboard assembly for a vehicle comprising a tailboard (4), two first lifting elements (7) and two second lifting elements (15,20) as well as driving means (34,35,36;11,13), all this in accordance with any one of the preceding claims.

10. A method for moving a tailboard (4) of a vehicle, wherby the tailboard (4) is moved in a substantially horizontal position from a low position, in which the tailboard (4) is positioned near the ground (3), to a high position, in which the tailboard (4) is substantially contiguous to a floor portion (30) of the vehicle (1), and vice versa, whereby on either side of the tailboard (4) a first lifting element is present in the shape of a pivoting arm (7) which is pivoted to the vehicle (1) about a first pivot axis (6), which first lifting element pivotably engages the tailboard (4) near the edge of the tailboard (4) that faces the vehicle (1), and a second lifting element (15, 20) is present, which is connected to the tailboard (4) at a point some distance apart from said edge, **characterized in that** said second lifting element (15, 20) comprises a pivoting element (15), which pivot to said vehicle (1) about a second pivot axis (17), and a pulling element (20), which is attached on the one hand to the tailboard (4) and on the other hand to the pivoting element (15), at a point some distance apart from said second pivot axis (17).

## Patentansprüche

1. Fahrzeug, das mit einer hinteren Bordwand (4) versehen ist, die in einer im wesentlichen horizontalen Lage von einer niederen Position, in der sich die hintere Bordwand (4) in der Nähe des Bodens (3) befindet, in eine hohe Position bewegt werden kann. in der sich die hintere Bordwand (4) im wesentlichen anschließend bzw. eng benachbart zu einem Bodenbereich (30) des Fahrzeugs (1) befindet, und umgekehrt, wobei auf jeder Seite der hinteren Bordwand (4) ein erstes Hubelement in Form eines Schwenkarms (7) vorhanden ist, das bezüglich des Fahrzeugs (1) um eine erste Schwenkachse (6) angelenkt ist, wobei das erste Hubelement mit der hinteren Bordwand (4) in der Nähe des Rands der hinteren Bordwand (4), der zu dem Fahrzeug (1) weist, zusammenwirkt, und wobei ein zweites Hubelement (15, 20) vorhanden ist, das mit der hinteren Bordwand (4) an einem Punkt in einem gewissen Abstand von dem genannten Rand verbunden ist, **dadurch gekennzeichnet, daß** das zweite Hubelement (15, 20) ein Schwenkelement (15) umfaßt, das an dem genannten Fahrzeug (1) um eine zweite Schwenkachse (17) angelenkt ist, und ein Zugelement (20), das einerseits an der hinteren Bordwand (4) und andererseits an dem Schwenkelement (15) befestigt ist, an einem Punkt, der sich in einem gewissen Abstand von der zweiten Schwenkachse (17) befindet.

2. Fahrzeug nach Anspruch 1, **dadurch gekennzeichnet, daß** das Zugelement (20) zwei schwenkbar miteinander verbundene Stangen (21, 22) umfaßt, die schwenkbar einerseits mit der hinteren Bordwand (4) und andererseits mit dem genannten Schwenkelement (15) verbunden sind.

3. Fahrzeug nach einem der vorangehenden Ansprüche, **dadurch gekennzeichnet**, **dadurch gekennzeichnet, daß** eine mechanische Kopplung (12) zwischen dem ersten Hubelement (7) und dem zweiten Hubelement (15, 20) vorgesehen ist, so daß ein Antriebsmechanismus (23, 35, 36; 11, 13), der ein Hubelement (7) antreibt, auch das andere Hubelement (15, 20) über das genannte Hubelement (7) und die genannte mechanische Kopplung (12) antreibt.

4. Fahrzeug nach Anspruch 3, **dadurch gekennzeichnet, daß** die mechanische Kopplung ein Verbindungselement (12) umfaßt, das auf der einen Seite mit dem ersten Hubelement (7) verbunden ist, an einem Punkt in einem gewissen Abstand von der ersten Schwenkachse (6), und auf der anderen Seite mit dem Schwenkelement (15) des zweiten Hubelements (15.20), an einem Punkt in einem gewissen Abstand von der zweiten Schwenkachse (17).

5. Fahrzeug nach Anspruch 4, **dadurch gekennzeichnet, daß** das Verbindungselement (12) eine einstellbare Längenabmessung aufweist.

6. Fahrzeug nach einem der vorangehenden Ansprüche, **dadurch gekennzeichnet, daß** eine Antriebseinrichtung (34, 35, 36; 11, 13) vorhanden ist, die mit dem ersten Hubelement (7) an einem Punkt (33) zwischen der ersten Schwenkachse (6) und dem genannten Rand der hinteren Bordwand (4) zusammenwirkt.

7. Fahrzeug nach einem der vorangehenden Ansprüche, **dadurch gekennzeichnet, daß** sowohl das erste Hubelement (7) als auch das zweite Hubelement (15, 20) an einer vertikalen Versteifungsplatte befestigt sind, die an dem Fahrzeug (1) angebracht ist.

8. Fahrzeug nach einem der vorangehenden Ansprüche, **dadurch gekennzeichnet, daß** die hintere Bordwand (4) zwischen einer im wesentlichen horizontalen Position und einer im wesentlichen vertikalen Position verschwenkt werden kann, wenn sie ihre hohe Position einnimmt, wobei die hintere Bordwand (4) von Hand erfaßt und verschwenkt werden kann und in der genannten im wesentlichen vertikalen Position mittels einer Verriegelung verriegelt werden kann, so daß die hintere Wand des Fahrzeugs (1) gebildet wird.

9. Anordnung einer hinteren Bordwand für ein Fahrzeug, mit einer hinteren Bordwand (4), zwei ersten Hubelementen (7) und zwei zweiten Hubelementen (15, 20) und einer Antriebseinrichtung (34,35, 36: 11,13) gemäß einem der vorangehenden Ansprüche.

10. Verfahren zum Bewegen einer hinteren Bordwand (4) eines Fahrzeugs, wobei die hintere Bordwand (4) in einer im wesentlichen horizontalen Lage von einer niederen Position. in der sich die hintere Bordwand (4) in der Nähe des Bodens (3) befindet, in eine hohe Position bewegt wird, in der sich die hintere Bordwand (4) im wesentlichen anschließend bzw. eng benachbart zu einem Bodenabschnitt (30) des Fahrzeugs (1) befindet, und umgekehrt. wobei auf jeder Seite der hinteren Bordwand (4) ein erstes Hubelement in Form eines Schwenkarms (7) vorhanden ist. das bezüglich des Fahrzeugs (1) um eine erste Schwenkachse (6) angelenkt ist, wobei das erste Hubelement mit der hinteren Bordwand (4) in der Nähe des Rands der hinteren Bordwand (4), der zum Fahrzeug (1) weist, zusammenwirkt, und wobei ein zweites Hubelement (15, 20) vorhanden ist, das mit der hinteren Bordwand (4) an einem Punkt in einem gewissen Abstand von dem genannten Rand verbunden ist, **dadurch gekennzeichnet, daß** das zweite Hubelement (15, 20) ein Schwenkelement (15) umfaßt, das an dem genannten Fahrzeug (1) um eine zweite Schwenkachse (17) angelenkt ist, und ein Zugelement (20), das einerseits an der hinteren Bordwand (4) und andererseits an dem Schwenkelement (15) befestigt ist, an einem Punkt, der sich in einem gewissen Abstand von der zweiten Schwenkachse (17) befindet.

## Revendications

1. Véhicule pourvu d'un plateau arrière de chargement (4) qui peut être déplacé dans une position sensiblement horizontale depuis une position basse, dans laquelle le plateau arrière de chargement (4) est positionné à proximité du sol (3), vers une position haute, dans laquelle le plateau arrière de chargement (4) est sensiblement contigu à une partie de plancher (30) du véhicule (1), et vice versa, tandis que de chaque côté du plateau arrière de chargement (4) est présent un premier élément de levage se présentant sous la forme d'un bras pivotant (7) qui est articulé au véhicule (1) autour d'un premier axe de pivot (6), lequel premier élément de levage s'engage en pivotant avec le plateau arrière de chargement (4) au voisinage du bord du plateau arrière de chargement (4) qui fait face au véhicule (1), et un second élément de levage (15,20) est présent, qui est relié au plateau arrière de chargement (4) en un point quelque peu distant dudit bord, **caractérisé en ce que** ledit second élément de levage (15,20) comprend un élément pivotant (15), qui est articulé audit véhicule (1) autour d'un second axe de pivot (17), et un élément de traction (20), qui est fixé d'une part au plateau arrière de chargement (4) et d'autre part à l'élément pivotant (15), en un point quelque peu distant dudit second axe de pivot (17).

2. Véhicule selon la revendication 1, **caractérisé en ce que** ledit élément de traction (20) comprend deux barres interconnectées en pivotement (21,22), qui sont fixées de façon à pouvoir pivoter d'une part sur le plateau arrière de chargement (4) et d'autre part sur ledit élément pivotant (15).

3. Véhicule selon l'une quelconque des revendications précédentes, **caractérisé en ce qu'**un couplage mécanique (12) est prévu entre le premier élément de levage (7) et ledit second élément de levage (15,20), de telle sorte qu'un mécanisme d'entraînement (23,35,36; 11,13) qui entraîne un élément de levage (7) entraîne également l'autre élément de levage (15,20) par l'intermédiaire dudit qu'élément de levage (7) et dudit couplage mécanique (12).

4. Véhicule selon la revendication 3,**caractérisé en ce que** ledit couplage mécanique comprend un élément de connexion (12) qui est relié d'une part audit premier élément de levage (7), en un point quelque peu distant dudit premier axe de pivot (6), et d'autre part audit élément pivotant (15) du second élément de levage (15,20) en un point quelque peu distant dudit second axe de pivot (17).

5. Véhicule selon la revendication 4, **caractérisé en ce que** ledit élément de connexion (12) a une dimension qui est réglable en longueur.

6. Véhicule selon l'une quelconque des revendications précédentes, **caractérisé par** des moyens d'entraînement (34,35,36; 11,13) qui viennent s'engager avec le premier élément de levage (7) en un point (33) situé entre ledit premier axe de pivot (6) et le bord précédemment mentionné dudit plateau arrière de chargement (4).

7. Véhicule selon l'une quelconque des revendications précédentes, **caractérisé en ce que** ledit premier élément de levage (7) et ledit second élément de levage (15,20) sont tous deux fixés à une plaque de raidissement verticale qui est fixée au véhicule (1).

8. Véhicule selon l'une quelconque des revendications précédentes, **caractérisé en ce que** ledit plateau arrière de chargement (4) peut pivoter entre une position sensiblement horizontale et une position sensiblement verticale lorsqu'il occupe sa position haute, de sorte que le plateau arrière de chargement (4) peut être saisi et tourné à la main et être verrouillé dans ladite position sensiblement verticale au moyen d'un verrou, formant ainsi la paroi arrière du véhicule (1).

9. Ensemble de plateau arrière de chargement pour véhicule comprenant un plateau arrière de chargement (4), deux premiers éléments de levage (7) et deux seconds éléments de levage (15,20) ainsi que des moyens d'entraînement (34,35,36; 11,13), tous ces éléments étant conformes à l'une quelconque des revendications précédentes.

10. Procédé pour déplacer un plateau arrière de chargement (4) d'un véhicule, dans lequel le plateau arrière de chargement (4) est déplacé dans une position sensiblement horizontale depuis une position basse, dans laquelle le plateau arrière de chargement (4) est positionné au voisinage du sol (3), vers une position haute, dans laquelle le plateau arrière de chargement (4) est sensiblement contigu à une partie de plancher (30) du véhicule (1), et vice versa, dans lequel de chaque côté du plateau arrière de chargement (4) est présent un premier élément de levage se présentant sous la forme d'un bras pivotant (7) qui est articulé au véhicule (1 ) autour d'un premier axe de pivot (6), lequel premier élément de levage s'engage en pivotant avec le plateau arrière de chargement (4) au voisinage du bord du plateau arrière de chargement (4) qui fait face au véhicule (1), et un second élément de levage (15,20) est présent, qui est relié au plateau arrière de chargement (4) en un point quelque peu distant dudit bord, **caractérisé en ce que** ledit second élément de levage (15,20) comprend un élément pivotant (15), qui est articulé audit véhicule (1) autour d'un second axe de pivot (17), et un élément de traction (20), qui est fixé d'une part au plateau arrière de chargement (4) et d'autre part à l'élément pivotant (15), en un point quelque peu distant dudit second axe de pivot (17).
